# EUROPÄISCHE PATENTANMELDUNG

(11) **EP 2 886 892 A1**
(43) Veröffentlichungstag der Anmeldung: **24.06.2015**
(21) Anmeldenummer: 14198101.9
(22) Anmeldetag: 16.12.2014
(51) Int. Cl.: F16C 33/04, F16C 33/12, F16C 33/14, F16C 17/02, F16C 33/10, F16C 35/02

(54) **Verfahren zum Herstellen einer Lagerkomponente, Lagerkomponente, Lageranordnung mit der Lagerkomponente sowie Verwendung der Lagerkomponente**

(30) Priorität: 19.12.2013 DE 102013226556
(71) Anmelder: Aktiebolaget SKF, 41 550 Göteborg (SE)
(72) Erfinder: Pickel, Edgar, 97334 Sommerach (DE)
(74) Vertreter: Kuhstrebe, Jochen

(57) **Zusammenfassung**

Ausführungsbeispiele beziehen sich auf ein Verfahren (1) zum Herstellen einer Lagerkomponente (4). Bei dem Verfahren (1) wird ein Formlings aus einem Pulver geformt und dann heißisostatisch gepresst.

## Beschreibung

Ausführungsbeispiele beziehen sich auf ein Verfahren zum Herstellen einer Lagerkomponente, eine Lagerkomponente, eine Lageranordnung mit der Lagerkomponente sowie eine Verwendung der Lagerkomponente.

Für Lager und deren einzelne Lagerkomponenten können eine Vielzahl von Werkstoffen verwendet werden. Meist richtet sich die Werkstoffauswahl für eine Lagerkomponente nach einem Anwendungsfall für das Lager oder die Lagerkomponente. Bei manchen Anwendungen sind die Lagerkomponenten sehr beanspruchenden Umgebungsbedingungen ausgesetzt. Dies kann beispielsweise dann der Fall sein, wenn die Lagerkomponente oder das Lager in einem Metallbad eingesetzt wird. Solche Anwendungsfälle können in einer Verzinkungsanlage auftreten. Konventionelle Lager oder Lagerkomponenten für solche Anwendungen umfassen oft keramische Werkstoffe oder Stellite. Mit Lagerkomponenten aus diesen Materialen können meist keine zufriedenstellenden Standzeiten der Lagerung erzielt werden. Gründe dafür können beispielsweise die unterschiedlichen Wärmeausdehnungskoeffizienten der Werkstoffe oder der Keramik sein. Ferner kann eine hohe Sprödigkeit des keramischen Werkstoffs oder der Keramik zu einem Materialbruch führen. Auch in einer Vielzahl von anderen Anwendungen kann mit konventionellen Lagern oder Lagerkomponenten oft keine zufriedenstellende Standzeit erzielt werden.

Es besteht daher ein Bedarf daran, ein Konzept für ein Lager oder eine Lagerkomponente mit einer erhöhten Standzeit bereitzustellen. Diesem Bedarf tragen ein Verfahren nach Anspruch 1, eine Lagerkomponente nach Anspruch 4 und eine Lageranordnung nach Anspruch 9 sowie eine Verwendung einer Lagerkomponente nach Anspruch 10 Rechnung.

Ausführungsbeispiele betreffen ein Verfahren zum Herstellen eines Gleitlagerrings oder einer Gleitlagerbuchse. Bei dem Verfahren wird ein Formling aus einem Pulver geformt. Der Formling wird heißisostatisch gepresst. Dadurch, dass des Gleitlagerrings oder die Gleitlagerbuchse durch ein heißisostatisches Pressverfahren hergestellt wird, kann bei manchen Ausführungsbeispielen eine Standzeit des Gleitlagerrings oder der Gleitlagerbuchse erhöht werden. Dies kann beispielsweise ermöglicht werden, weil der Gleitlagerring oder die Gleitlagerbuchse eine höhere Verschleißfestigkeit, eine höhere Temperaturbeständigkeit und/oder eine höhere Elastizität aufweist.

Bei einem heißisostatischen Pressen wird zum Beispiel ein Formling aus einem Pulver gleichzeitig mit Temperatur und Druck beaufschlagt. Beispielsweise kann das Pulver oder ein pulverförmiger Werkstoff mit einem Umgebungsdruck von 1000 bar und einer Temperatur von 1000°C ausgesetzt werden.

Das Pulver, aus dem der Formling geformt wird, umfasst bei manchen Ausführungsbeispielen eine Mehrzahl unterschiedlicher pulverförmiger Werkstoffe. Bei dem Verfahren können also ggf. unterschiedliche pulverförmige Werkstoffe gemischt werden. So könnte bei manchen Ausführungsbeispielen des Gleitlagerrings oder der Gleitlagerbuchse eine Eigenschaft bezüglich Härte oder einem Verhalten bei einer Temperaturänderung verändert oder beeinflusst werden.

Ausführungsbeispiele betreffen gemäß einem weiteren Aspekt einen Gleitlagerring oder eine Gleitlagerbuchse, die mit einem Verfahren nach zumindest einem der Ausführungsbeispiele hergestellt wurde. Dadurch, dass der Gleitlagerring oder die Gleitlagerbuchse heißisostatisch gepresst wurde, kann der Gleitlagerring oder die Gleitlagerbuchse verbesserte Eigenschaften bezüglich Verschleiß, Temperaturbeständigkeit, Elastizität und dergleichen aufweisen. Dadurch könnte eine Standzeit des Gleitlagerrings oder der Gleitlagerbuchse erhöht sein und/oder der Gleitlagerrings oder die Gleitlagerbuchse könnte sich besser zur Verwendung unter hoch beanspruchten Anwendungen eignen, wie beispielsweise in Metallbädern.

Bei einigen weiteren Ausführungsbeispielen des Verfahrens umfasst der pulverförmige Werkstoffe Wolfram-Karbid (WC) und/oder ein anderes keramisches Material. Bei manchen Ausführungsbeispielen des Verfahrens kann so der Gleitlagerrings oder die Gleitlagerbuchse mit einer erhöhten Verschleißfestigkeit hergestellt werden. Wolfram-Karbid und/oder das andere keramische Material können als Pulver einem anderen pulverförmigen Grundwerkstoff zugemischt werden. Bei manchen Ausführungsbeispielen ist der Grundwerkstoff ein Metall, zum Beispiel Stahl oder Edelstahl.

Ausführungsbeispiele betreffen gemäß einem weiteren Aspekt einen Gleitlagering oder eine Gleitlagerbuchse, wobei ein Werkstoff des Gleitlagerrings oder der Gleitlagerbuchse eine Porosität aufweist, die kleiner als 0,1 % ist. So kann bei manchen Ausführungsbeispielen die Lagerkomponente sehr homogen ausgebildet sein. Beispielsweise kann dadurch eine Stabilität des Gleitlagerrings oder der Gleitlagerbuchse erhöht sein. Ferner kann der Werkstoff offenporig und ergänzend oder alternativ auch geschlossenporig ausgebildet sein. Bei einem offenporigen Werkstoff können zum Beispiel einzelne Poren oder Zellen miteinander verbunden sein. Im Gegensatz dazu, können die Poren oder Zellen bei einem geschlossenporigen Werkstoff ggf. vollständig mit einer Zell- oder Porenwand umgeben sein.

Ergänzend oder alternativ kann der Werkstoff des Gleitlagerrings oder der Gleitlagerbuchse einen Wärmeausdehnungskoeffizient von wenigstens 18•10-6 K⁻¹ aufweisen. Manche Ausführungsbeispiele des Gleitlagerrings oder der Gleitlagerbuchse können sich dadurch gut für Anwendungen eignen, in denen die Lagerkomponente unterschiedlichen Temperaturen oder großen Temperaturschwankungen ausgesetzt ist. Dadurch können bei manchen Ausführungsbeispielen Hitzespannungen in einer Lagerung mit dem Gleitlagerring oder der Gleitlagerbuchse vermieden oder zumindest reduziert werden. So könnte in vielen Betriebszuständen ein optimaler Lagersitz ermöglicht werden.

Bei manchen Ausführungsbeispielen weist die Lagerkomponente oder ein Werkstoff des Gleitlagerrings oder der Gleitlagerbuchse eine Dichte von mindestens 2,67 g/cm³ auf. Aufgrund der erhöhten Dichtewerte kann die Lagerkomponente bei manchen Ausführungsbeispielen verbesserte statische und/oder dynamische Eigenschaften aufweisen.

Bei einigen weiteren Ausführungsbeispielen umfasst die Lagerkomponente als Werkstoff zumindest teilweise Edelstahl, eine Keramik und/oder Wolfram-Karbid. Durch die Verwendung von Edelstahl, können bei manchen Ausführungsbeispielen vergleichbare Wärmeausdehnungskoeffizienten wie von Umgebungsbauteilen des Gleitlagerrings oder der Gleitlagerbuchse erreicht werden. Dadurch können beispielsweise Hitzespannungen zwischen dem Gleitlagerrings oder der Gleitlagerbuchse und benachbarten Umgebungsbauteilen, die ebenfalls Edelstahl umfassen, vermieden werden und über viele Betriebszustände ein optimaler Lagersitz realisiert werden. Ferner könnte durch harte Zusatzkomponenten eine Verschleißfähigkeit des Gleitlagerrings oder der Gleitlagerbuchse erhöht werden.

Optional kann es sich bei der Lagerkomponente um einen Gleitlagerring, eine Gleitlagerbuchse, eine Gleitschale, eine Laufbuchse, einen Wälzlagerring, einen Wälzlagerkäfig und/oder einem Wälzkörper handeln. Dadurch, dass diese Bauteile in einem heißisostatischen Pressverfahren hergestellt werden und/oder die Eigenschaften zumindest eines der vorhergehenden Ausführungsbeispiele aufweisen, können diese Bauteile in manchen Ausführungsbeispielen eine höhere Standzeit gegenüber konventionellen Lagerkomponenten erhalten. Eine Gleitlagerbuchse ist beispielsweise ein Bauteil, das ausgebildet ist, um mit einer Gleitoberfläche entlang einer anderen Komponente zu gleiten. Die andere Komponente kann zum Beispiel eine Welle und/oder ein Gehäuse sein. Dabei kann die Gleitlagerbuchse zum Beispiel die Form eines Rings aufweisen. Unter Umständen kann an dem Ring wenigstens ein Bord vorgesehen sein.

Ein Gleitlagerring kann zum Beispiel in einem Gleitlager angeordnet sein. Der Ring kann zum Beispiel als Innenring konzentrisch zu einem Außenring oder als Außenring konzentrisch zu einem Innenring angeordnet sein. Dabei können beispielsweise der Innenring und der Außenring relativ zueinander gleiten. Beispielsweise kann der Außenring drehfest mit einem Gehäuse und der Innenring drehfest mit einer Welle verbunden sein.

Ausführungsbeispiele betreffen gemäß einem weiteren Aspekt eine Lageranordnung mit einer Lagerkomponente nach zumindest einem der Ausführungsbeispiele. Bei dem Gleitlagerring oder der Gleitlagerbuchse handelt es sich um eine, in einer Bohrung drehbar gelagerte Gleitlagerbuchse. Die Gleitlagerbuchse ist in einer Welle aufgenommen. Zwischen einer Wandlung der Bohrung und der Gleitlagerbuchse ist zumindest abschnittsweise eine Keramikkomponente eingebracht. Die Lageranordnung kann sich bei manchen Ausführungsbeispielen zur Verwendung in einem Metallbad, beispielsweise in einem Zinkbad, einer Verzinkungsanlage eignen.

Ausführungsbeispiele betreffen gemäß einem weiteren Aspekt eine Verwendung einer Lagerkomponente nach zumindest einem der Ausführungsbeispiele oder einer Lageranordnung nach zumindest einem der Ausführungsbeispiele in einer Hochtemperaturanwendung. Bei der Hochtemperaturanwendung können zum Beispiel Temperaturen von über 100°C, 110°C, 120°C, 130°C, 140°C, 150°C, 170°, 180°C, 190°, 200°C, 250°C, 300°C, 350°C, 400°C, 450°, 500°C auftreten. Durch die Verwendung des Gleitlagerrings oder der Gleitlagerbuchse oder der Lageranordnung kann unter Umständen in Hochtemperaturanwendungen eine erhöhte Standzeit der Lagerung erreicht werden.

Weitere vorteilhafte Ausgestaltungen werden nachfolgend anhand von in den Zeichnungen dargestellten Ausführungsbeispielen, auf welche Ausführungsbeispiele jedoch nicht beschränkt sind, näher beschrieben.

So zeigen die Figuren schematisch die nachfolgenden Ansichten.
Fig. 1 zeigt eine schematische Darstellung eines Verfahrens zum Herstellen einer Lagerkomponente gemäß einem Ausführungsbeispiel;
Fig. 2 zeigt eine schematische Darstellung einer Schnittansicht einer Lagerkomponente gemäß einem Ausführungsbeispiel;
Fig. 3 zeigt eine schematische Darstellung einer Seitenansicht einer Lageranordnung gemäß einem Ausführungsbeispiel; und
Fig. 4 zeigt eine schematische Darstellung einer Schnittansicht der Lageranordnung gemäß Fig. 3.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch ggf. auch unterschiedlich ausgeführt sein, sofern sich aus der Beschreibung nicht etwas anderes explizit oder implizit ergibt.

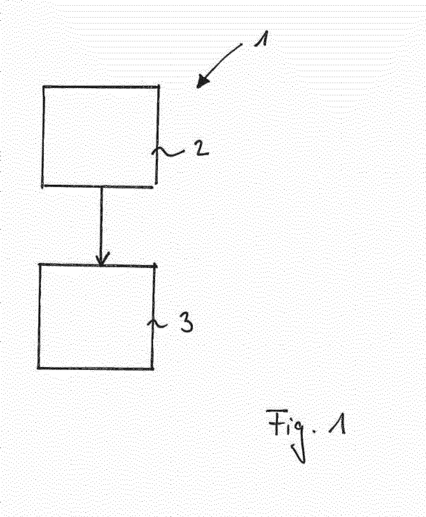

Fig. 1 zeigt eine schematische Darstellung eines Verfahrens 1 zum Herstellen einer Lagerkomponente gemäß einem Ausführungsbeispiel.

Bei dem in Fig. 1 dargestellten Verfahren 1 zum Herstellen einer Lagerkomponente wird in einem ersten Vorgang 2 ein Formling aus einem Pulver geformt. In einem weiteren Vorgang 3 wird der Formling heißisostatisch gepresst. Dazu wird der Formling einem hohen Druck von ca. 1000 bar und einer hohen Temperatur von ca. 1000°C ausgesetzt.

Bei einigen weiteren, nicht dargestellten Ausführungsbeispielen liegt der Druck in einem Wertebereich mit einem Anfangs- und/oder einem Endwert von 900 bar, 1000 bar, 1200 bar, 1400 bar, 1600 bar, 1800 bar und/oder 2000 bar. Ergänzend oder alternativ liegt die Temperatur bei manchen Ausführungsbeispielen in einem Wertebereich mit einem Anfangs- und/oder einem Endweit von 900°C, 1000°C, 1200°C, 1400°C, 1600°C, 1800°C und/oder 2000°C.

Mit anderen Worten kann das Bauteil oder der Formling zu dem heißisostatischen Pressen in einen dichten, verformbaren Behälter eingesetzt werden. Dieser Behälter kann in einen beheizbaren Druckkessel eingesetzt werden. In dem Druckkessel kann dann der Behälter mit dem Bauteil, ggf. unter einem Schutzgas, verdichtet werden.

Mit dem Verfahren 1 können Lagerkomponenten hergestellt werden, die eine geringe Porosität und/oder eine homogene Porenverteilung aufweisen. Ein gasförmiger Anteil des Werkstoffs kann beispielsweise 0,1% des Gesamtvolumens der Lagerkomponente ausmanchen. Ggf. kann der Anteil auch in einem Bereich zwischen 0,01% und 2% liegen.

Durch das heißisostatische Pressen in dem Vorgang 3 bei dem Verfahren 1 können Lagerkomponenten hergestellt werden, an die in der Anwendung besondere Anforderungen, zum Beispiel an die Verschleißfestigkeit und/oder eine Temperaturbeständigkeit, gestellt werden. Beispielsweise könnte so die Standzeit einer Lagerkomponente erhöht werden. Durch das Formen des Formlings in dem Vorgang 2 aus einem Pulver kann eine Materialkombination auf einen jeweiligen Anwendungsfall abgestimmt werden. Dadurch können evtl. gezielt benötigte Materialeigenschaften realisiert werden. Als Grundmaterial kann ein Metall, beispielsweise ein hoch vergüteter Edelstahl, eingesetzt werden. Dadurch kann ein Wärmeausdämmungskoeffizient erreicht werden, den ggf. auch benachbarte Komponenten oder Umgebungsteilen aufweisen. Hitzespannungen zwischen dem Gleitlagerrings oder der Gleitlagerbuchse und den benachbarten Komponenten oder Umgebungsbauteilen könnten so ggf. vermieden oder zumindest reduziert werden. In vielen Betriebszuständen kann also ein optimaler Lagersitz realisiert werden. Um eine Verschleißfestigkeit des Gleitlagerrings oder der Gleitlagerbuchse zu erhöhen bzw. eine benötigte Verschleißfestigkeit des Gleitlagerrings oder der Gleitlagerbuchse zu erreichen, werden bei einigen Ausführungsbeispielen harte Zusatzkomponenten, wie z. B. Keramik und/oder Wolframcarbid eingebracht.

Ein mögliches Einsatzgebiet für eine Lagerkomponente, die nach dem Verfahren 1 hergestellt ist, ist eine Lageranordnung, die sich in einem Beschichtungsbad oder eine Beschichtungsanlage befindet. Solche Beschichtungsbäder können zum Beispiel ein Zink-, ein Aluminium-, ein Kupfer und andere Metallbäder sein.

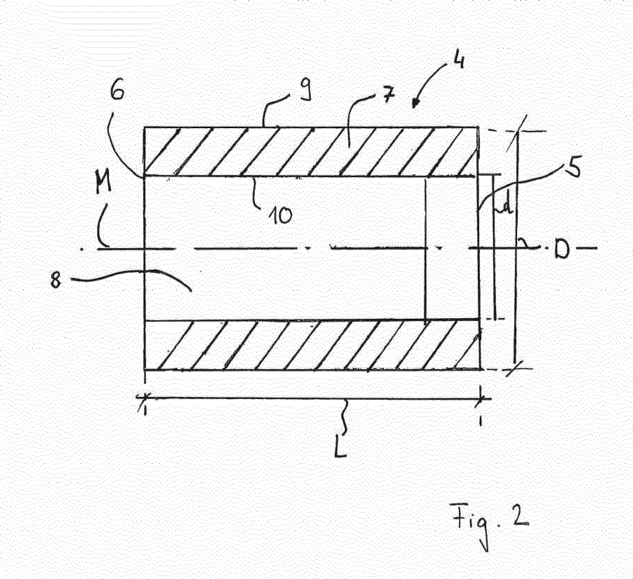

Fig. 2 zeigt eine schematische Darstellung einer Schnittansicht einer Lagerkomponente 4 gemäß einem Ausführungsbeispiel.

Bei der in Fig. 2 gezeigten Lagerkomponente 4 handelt es sich um eine Lauf- oder Gleitlagerbuchse. Die Lagerkomponente 4 kann beispielsweise in einer Lagerung, die sich in einem Zinkbad oder einer anderen Zinkbadanwendung befindet, eingesetzt werden.

Die Lagerkomponente 4 weist einen hohlzylindrischen Grundkörper 7 mit einem Außendurchmesser D auf. Der Außendurchmesser D liegt in einem Wertebereich mit einem Anfangs- und einem Endwert, wobei der Anfangs- und/oder der Endwert 100 mm, 110 mm, 120 mm, 130 mm, 140 mm, 150 mm und/oder 160 mm beträgt. Der hohlzylindrische Grundkörper 7 weist eine Bohrung 8 auf. Die Bohrung 8 ist konzentrische zu einer Mittelachse M und dem hohlzylindrischen Grundkörper 7 ausgerichtet. Ein Innendurchmesser d des hohlzylindrischen Grundkörpers 7 liegt in einem Wertebereich mit einem Anfangs- und/oder Endwert, der jeweils 70 mm, 80 mm, 90 mm, 100 mm, 110 mm, 120 mm, 130 mm und/oder 140 mm beträgt.

Ferner kann die Lagerkomponente 4 eine Länge L aufweisen. Die Länge L liegt in einem Wertbereich mit einem Anfangs- und/oder einem Endwert, der jeweils 120 mm, 130 mm, 140 mm, 150 mm, 160 mm, 170 mm, 180 mm, 190 mm, beträgt.

Jeweils an einem axialen Ende weist die Lagerkomponente 4 eine Öffnung 5 und eine Öffnung 6 auf.

Bei einigen weiteren, nicht dargestellten Ausführungsbeispielen kann an der Öffnung eine Senkung in die Bohrung eingebracht sein.

Ferner kann die Lagerkomponente bei einigen weiteren, ebenfalls nicht dargestellten Ausführungsbeispielen ergänzend oder alternativ, an zumindest einer der Kanten einen Radius aufweisen.

An einer nach radial außen gerichteten Mantelfläche 9 weist die Lagerkomponente einen Oberflächenrauheitswert von 1,6 (in µm) auf. Analog weist die Lagerkomponente 4 an einer nach radial innen gewandten Mantelfläche 10 ebenfalls einen Oberflächenrauheitswert von 1,6 auf. Bei einigen weiteren, nicht dargestellten Ausführungsbeispielen kann die Lager-komponente andere Oberflächenrauheitswerte aufweisen. Ergänzend oder alternativ kann die Lagerkomponente an der radial nach innen gerichteten Mantelfläche einen Oberflächenrauheitswert aufweisen, der sich von dem Oberflächenrauheitswert der radial nach außen gerichteten Mantelfläche unterscheidet.

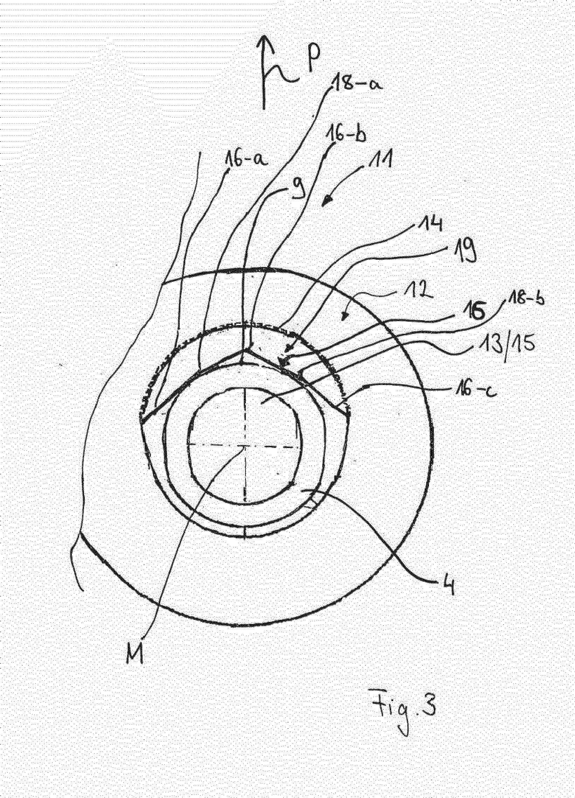

Fig. 3 zeigt eine schematische Darstellung einer Seitenansicht einer Lageranordnung 11 gemäß einem Ausführungsbeispiel.

Die in Fig. 3 gezeigte Lageranordnung 11 umfasst die Lagerkomponente 4. Die Lageranordnung 11 umfasst ferner eine Nabe 12, in der eine Welle 13 drehbar gelagert ist. Die Lagerkomponente 4 ist in einer Bohrung 14 drehbar gelagert. Die Bohrung 14 befindet sich in der Nabe 12.

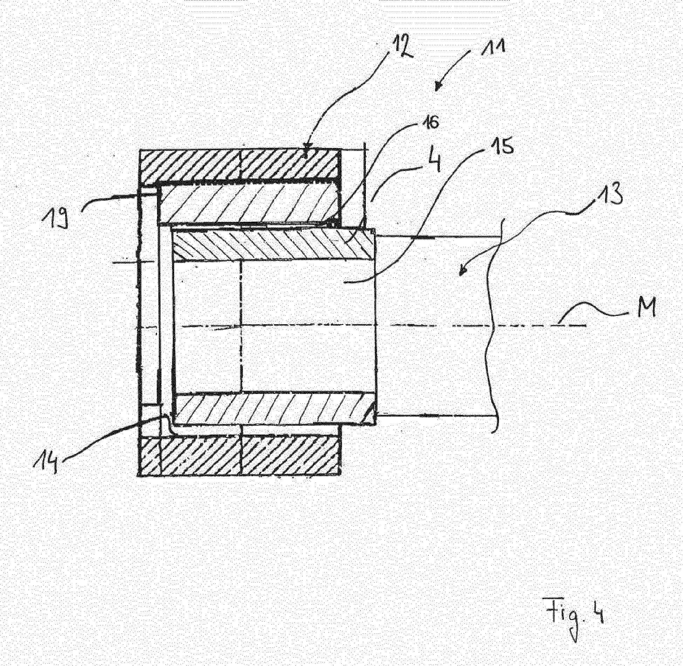

Die Welle 13 ist in der Lagerkomponente 4 aufgenommen. Ein Zapfen 15 der Welle 13 sitzt dazu in der Bohrung 8 der Lagerkomponente 4. Der Zapfen 15 befindet sich an einem Ende der Welle 13 und weist einen geringeren Durchmesser auf als die Welle 13 in einem mittleren Bereich. Wie in Fig. 4 erkennbar, ist die Welle 13 konzentrisch zu der Mittelachse M der Lagerkomponente 4 angeordnet.

Die Lagerkomponente 4 kann beispielsweise einen Wärmeausdehnungskoeffizienten aufweisen, der dem Wärmeausdehnungskoeffizienten des Zapfens 15 der Welle 13 entsprich oder ähnlich zu diesem ist. Beispielsweise kann der Zapfen 15 aus Edelstahl ausgebildet sein und einen Wärmeausdehnungskoeffizienten von 18•10-6 K⁻¹ aufweisen. Die Lagekomponente 4 weist bei manchen Ausführungsbeispielen eine höhere Zähigkeit, als das Grundmaterial in einem nicht heißisostatisch gepressten Zustand und einen hohen Verschleißschutz auf. Im Gegensatz zu reiner und/oder nicht heißisostatisch gepresster Keramik ist die Lagerkomponente 4 weniger spröde und bricht deshalb unter Umständen weniger leicht.

Zwischen einer Wandung der Bohrung 14, also der Nabe 12 und der Lagerkomponente 4, ist eine Keramikkomponente 16 angeordnet. Die Keramikkomponente 16 umgreift die Lagerkomponente 4 an ihrer radial nach außen gerichteten Mantelfläche 9. Die Keramikkomponente 16 umgreift die Lagerkomponente 4 in einem Winkelbereich zwischen 90° und 150°. Eine Keramikplatte oder eine Mehrzahl von Keramikplatten sind von der Keramikkomponente 16 umfasst oder bilden diese aus.

Die Keramikkomponente 16 weist drei höchste Punkte 16-a, 16-b und 16-c auf. Die höchsten Punkte 16-a, 16-b und 16-c liegen in einer radialen Richtung weg von einer Mittelachse M der Lagerkomponente 4. Ferner weist die Keramikkomponente 16 zwei tiefste Punkte 18-a und 18-b auf. An den Punkten 18-a und 18-b berührt die Keramikkomponente 16 die Lagerkomponente 4. Die als tiefsten und höchsten Punkte 16-a, 16-b und 16-c und 18-a und 18-b bezeichneten Bereiche weisen eine Ausdehnung in eine Umfangsrichtung und eine Ausdehnung in eine axiale Richtung auf.

Wie in Fig. 4 erkennbar, weist die Keramikkomponente 16 in axialer Richtung M eine Ausdehnung auf, die einer Tiefe entspricht, mit der der Zapfen 15 der Welle 13 in der Bohrung 14 der Nabe 12 aufgenommen ist.

Ferner umfasst die Lageranordnung 11 einen Trägerkörper 19. Der Trägerkörper 19 dient zur Positionierung der Keramikkomponente 16 in der Bohrung 14. Dazu weist der Trägerkörper 19 an einer radial nach außen gerichteten Seite eine Form auf, die einer Form der Bohrung 14 entspricht. Der Trägerkörper 19 liegt in einem Winkelbereich zwischen 100° und 200° an einer Wandung der Bohrung 14 der Nabe 12 an. An einer in radialer Richtung zu der Mittelachse M gerichteten Seite weist der Trägerkörper 19 eine Form auf, die im Wesentlichen einer Form der Keramikkomponente 16 entspricht, die an dem Trägerkörper 19 anliegt. Der Trägerkörper 19 weist im Wesentlichen eine V-Form auf und dient zur Aufnahme der eingelegten Keramikplatten der Keramikkomponente 16. Als Material kann der Trägerkörper 19 alle möglichen Werkstoffe umfassen. Der Trägerkörper 19 ist in einer Richtung P angeordnet, in die die Kraft gerichtet ist, die an der Welle 13 wirkt. Diese Kraft kann beispielsweise durch einen Bandzug, mit dem Teile in und/oder aus dem Metallbad gefördert werden, bewirkt werden.

Die Welle 13 kann beispielsweise mit einem nicht dargestellten Sicherungselement an der Nabe 12 gesichert sein. Dadurch könnte ein Herausrutschen der Welle 13 aus der Bohrung 14 der Nabe 12 in axialer Richtung vermieden werden. Dadurch, dass die Lageranordnung 11 die Keramikkomponente 16 und den Trägerkörper 19 umfasst, ist die Welle 13 nicht konzentrisch zur Bohrung 14 in der Nabe 12 angeordnet. Die Lagerkomponente 4 liegt in einem Bereich, an dem keine Keramikkomponente vorhanden ist, an der Wandung der Bohrung 14 an.
Mit anderen Worten handelt es sich bei der Lagerkomponente 4 um einen Gleitbuchse, die in einem heißisostatischen Pressverfahren (z. B. HIP) hergestellt wurde. Insbesondere in Anwendungen, bei denen für die Lagerkomponente aus konventionellen Werkstoffen keine ausreichende Standzeit erreicht werden konnte, kann durch die Lagerkomponente 4, die nach dem Verfahren 1 hergestellt wurde, eine deutliche Verbesserung der Standzeit erzielt werden.

Eine mögliche Anwendung der Lagerkomponente 4 oder einer Gleitbuchse ist in einer Lagerung, die sich in einem Beschichtungs- oder Metallbad befindet. In einem solchen Beschichtungsbad können beispielsweise Temperaturen von bis zu 500 °C oder mehr herrschen. Die Lagerkomponente 4 kann bei manchen Ausführungsbeispielen mit einem hoch abrasiven Beschichtungsmedium geschmiert werden.

Eine Lagerkomponente kann jedoch nicht nur, wie für die Figuren beschrieben, als Gleitlagerbuchse oder Laufbuchse ausgebildet sein. Beispielsweise können auch andere Lagerkomponenten in Gleit- oder Wälzlagern nach zumindest einem der Verfahren der Ausführungsbeispiele hergestellt sein. Ferner kann die Lagerkomponente oder die Lageranordnung auch in allen anderen Anwendungen, und nicht nur in Metallbädern, eingesetzt werden.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden.

Bei einigen weiteren Ausführungsbeispielen können Merkmale, die in anderen Ausführungsbeispielen als Vorrichtungsmerkmal offenbart sind, auch als Verfahrensmerkmale implementiert sein. Ferner können ggf. auch Merkmale, die in manchen Ausführungsbeispielen als Verfahrensmerkmale implementiert sind, in anderen Ausführungsbeispielen als Vorrichtungsmerkmale implementiert sein.

### Bezugszeichenliste

- 1: Verfahren
- 2: Formen
- 3: Heißisostatisches Pressen
- 4: Lagerkomponente
- 5: Öffnung
- 6: Öffnung
- 7: Grundkörper
- 8: Bohrung
- 9: Mantelfläche radial außen
- 10: Mantelfläche radial innen
- 11: Lageranordnung
- 12: Nabe
- 13: Welle
- 14: Bohrung
- 15: Zapfen
- 16: Keramikkomponente
- 18: Tiefster Punkt
- 19: Trägerkörper

- D: Außendurchmesser
- d: Innendurchmesser
- L: Länge
- M: Mittelachse
- P: Kraftrichtung

## Patentansprüche

1. Verfahren (1) zum Herstellen eines Gleitlagerrings oder einer Gleitlagebuchse (4), umfassend:
Formen (2) eines Formlings aus einem Pulver; und
Heißisostatisches (3) Pressen des Formlings.

2. Verfahren (1) nach Anspruch 1, umfassend, Mischen unterschiedlicher pulverförmiger Werkstoffe.

3. Verfahren (1) nach Anspruch 2; bei dem zumindest einer der pulverförmigen Werkstoffe Wolfram-Karbid oder ein keramisches Material umfasst.

4. Gleitlagerrings oder Gleitlagebuchse (4) hergestellt nach dem Verfahren einer der Ansprüche 1 oder 3.

5. Gleitlagerring oder Gleitlagebuchse (4) wobei ein Werkstoff des Gleitlagerrings oder der Gleitlagebuchse (4) eine Porosität aufweist, die kleiner ist als 0,10%.

6. Gleitlagerring oder Gleitlagebuchse (4) nach Anspruch 4 oder 5, wobei der Werkstoff des Gleitlagerrings oder der Gleitlagebuchse (4) einen Wärmeausdehnungskoeffizient von wenigstens 18•10-6 K⁻¹ aufweist oder wobei der Gleitlagerring oder die Gleitlagebuchse (4) eine Dichte von mindestens 2,67 g/cm³ aufweist.

7. Gleitlagerring oder Gleitlagebuchse (4) nach einem der Ansprüche 4 bis 6, wobei der Gleitlagerring oder die Gleitlagebuchse (4) als Werkstoff zumindest teilweise Keramik umfasst.

8. Gleitlagerring oder Gleitlagebuchse (4) nach einem der Ansprüche 4 bis 7, wobei der Gleitlagerring oder die Gleitlagebuchse (4) als Werkstoff zumindest teilweise Wolfram-Karbid umfasst.

9. Lageranordnung (11) mit einer Gleitlagerbuchse (4) nach einem der Ansprüche 4 bis 8, wobei die Gleitlagerbuchse (4) eine in einer Bohrung (14) drehbar gelagert ist, wobei in der Gleitlagerbuchse (4) eine Welle (13) aufgenommen ist, und zumindest abschnittsweise zwischen eine Wandung der Bohrung (14) und der Gleitlagerbuchse (4) eine Keramikkomponente (16) eingebracht ist.

10. Verwendung eines Gleitlagerrings oder einer Gleitlagerbuchse (4) nach einem der Ansprüche 4 bis 8 oder einer Lageranordnung (11) nach Anspruch 9 in einer Hochtemperaturanwendung bei über 200°C.
